# EUROPEAN PATENT APPLICATION

(11) **EP 4 703 840 A1**
(43) Date of publication of application: **04.03.2026**
(21) Application number: 25192066.6
(22) Date of filing: 28.07.2025
(51) Int. Cl.: G05D 16/20, F16K 1/00

(54) **REGULATOR**

(30) Priority: 02.09.2024 JP 2024151025
(71) Applicant: Nikki Co., Ltd., Atsugi, Kanagawa 243-0801 (JP)
(72) Inventor: SUEMATSU, Yukinori, Atsugi-shi, 243-0801 (JP); AIZAWA, Shutaro, Atsugi-shi, 243-0801 (JP)
(74) Representative: Boult Wade Tennant LLP

(57) **Abstract**

An object of the present invention is to cope with different pressure requirements and facilitate manufacturing and management in a regulator that reduces and adjusts a fluid pressure.

A regulator (100A) includes a body (10) that has a fluid introduction port (12) and a fluid discharge port (13), and a pressure regulation valve (20) that partitions a primary pressure chamber (1) and a secondary pressure chamber (2). The pressure regulation valve (20) includes a cylindrical valve body (21A), a valve seat (22A) on which the valve body (21A) is seated when the valve is closed, and a valve body movement means (30) that causes the valve body (21A) to reciprocate in the axial direction. The valve body (21A) is formed by joining a head portion (21a) that is seated on the valve seat (22A) and a body portion (21b) that reciprocates in the axial direction.

## Description

### Technical Field

The present invention relates to a regulator that reduces and adjusts a fluid pressure.

### Related Art

As a regulator that discharges a high-pressure fluid such as gas fuel while reducing and adjusting the pressure of the fluid to a predetermined pressure, for example, as disclosed in JP 2019-067216 A, there is a regulator using a piston type pressure regulation valve that adjusts the pressure of the fluid to be discharged by using a pressure regulation spring and a piston to balance a load due to the pressure of the fluid acting on the piston and a load due to the pressure regulation spring acting on the piston.

When gas fuel stored in a cylinder at a relatively high pressure (20 MPa) such as CNG is introduced at the high pressure and depressurized, a temperature becomes an extremely low temperature of around -200°C due to a temperature decrease during adiabatic expansion. For this reason, a valve seat and a valve body of the pressure regulation valve need to have a material and a shape that can withstand such low temperature.

### Citation List

### Patent Literature

Patent Literature 1: JP 2019-067216 A

### Summary of Invention

### Technical Problem

That is, for example, in a case of reducing and adjusting the pressure of CNG, it is necessary to prepare pressure regulation valves having a specification of performing pressure reduction from a pressure of 20 MPa having a relatively high pressure requirement and a specification of performing pressure reduction from a pressure of 5 MPa already reduced and having a relatively low pressure requirement. For this reason, there is a problem that manufacturing and management become complicated.

Therefore, an object of the present invention is to cope with different pressure requirements and facilitate manufacturing and management in a regulator that reduces and adjusts a fluid pressure.

### Solution to Problem

The present invention provides a regulator including: a body in which a passage through which a fluid passes is formed to penetrate the body, the body having one end of the passage as a fluid introduction port and the other end of the passage as a fluid discharge port; and a pressure regulation valve provided on the passage and partitioning a primary pressure chamber on a side of the fluid introduction port and a secondary pressure chamber on a side of the fluid discharge port, the regulator enabling a fluid whose pressure is adjusted to a predetermined pressure to be extracted from the fluid discharge port, in which
the pressure regulation valve includes a cylindrical valve body which is capable of reciprocating in an axial direction and causes the primary pressure chamber and the secondary pressure chamber to communicate with each other when a valve is opened, a valve seat which is mounted on the body and on which the valve body is seated when the valve is closed, and a valve body movement means which reciprocates the valve body in the axial direction, and
the valve body is formed by joining a head portion seated on the valve seat when the valve is closed and a body portion reciprocating in the axial direction by the valve body movement means.

### Advantageous Effects of Invention

According to the present invention, it is possible to provide a regulator that copes with different pressure requirements and facilitates manufacturing and management.

### Brief Description of Drawings

FIG. 1 is a longitudinal cross-sectional view illustrating a regulator according to a first embodiment of the present invention;
FIG. 2A is a partial cross-sectional view illustrating a head portion 21a and a body portion 21b forming a valve body 21A of the regulator illustrated in FIG. 1, and FIG. 2B is a partial cross-sectional view illustrating the head portion 21a and the body portion 21b having different shapes;
FIG. 3 is a view illustrating an assembly process (1) of the regulator illustrated in FIG. 1;
FIG. 4 is a view illustrating an assembly process (2) of the regulator illustrated in FIG. 1;
FIG. 5 is a view illustrating an assembly process (3) of the regulator illustrated in FIG. 1;
FIG. 6 is a longitudinal cross-sectional view illustrating a regulator according to a second embodiment of the present invention;
FIG. 7 is a view illustrating an assembly process (2) of the regulator illustrated in FIG. 6; and
FIG. 8 is a view illustrating an assembly process (3) of the regulator illustrated in FIG. 6.

### Description of Embodiments

Hereinafter, embodiments of the present invention will be described with reference to the drawings.

### <First Embodiment>

A first embodiment of the present invention will be described below.

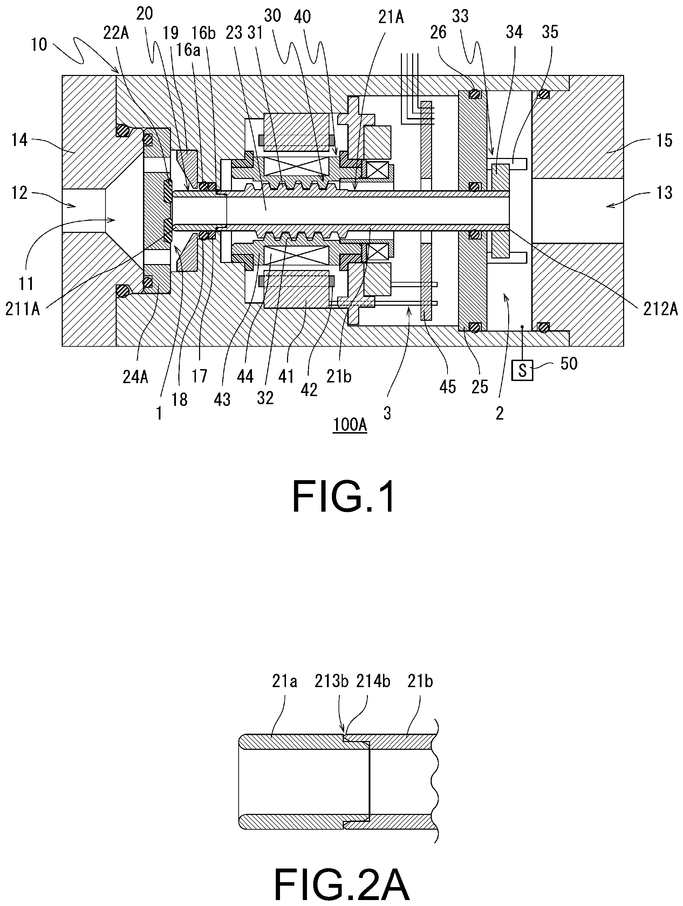

FIG. 1 illustrates a regulator 100A according to the first embodiment of the present invention.

The regulator 100A is mainly assumed to be used as a pressure reduction means for delivering gas fuel such as CNG, LPG, or hydrogen gas while reducing a pressure of the gas fuel to a predetermined pressure in a supply system of the gas fuel, and the first embodiment is suitable when a pressure requirement is relatively low.

The regulator 100A is an electronically controlled regulator including a body 10 in which a passage 11 through which a fluid passes is formed to penetrate the body, a pressure regulation valve 20 provided on the passage 11, and an electric motor 40.

The body 10 has a cylindrical shape, and one end of the passage 11 is used as a fluid introduction port 12 and the other end of the passage 11 is used as a fluid discharge port 13.

An inlet cover 14 is attached to the fluid introduction port 12 side, and an outlet cover 15 is attached to the fluid discharge port 13 side.

The pressure regulation valve 20 is provided on the passage 11 to partition a primary pressure chamber 1 on the fluid introduction port 12 side and a secondary pressure chamber 2 on the fluid discharge port 13 side.

A pressure control unit 3 for operating the pressure regulation valve 20 to reduce and adjust the pressure of the fluid to be discharged to a setting pressure is provided between the primary pressure chamber 1 and the secondary pressure chamber 2**.**

The pressure regulation valve 20 includes a cylindrical valve body 21A capable of reciprocating in an axial direction, a valve seat 22A that contacts and separates from the valve body 21A to open and close the valve, a valve body movement means 30 that reciprocates the valve body 21A in the axial direction, an electric motor 40 that operates the valve body movement means 30, and a pressure sensor 50 that detects the fluid pressure on the secondary pressure chamber 2 side.

When the valve body 21A separates from the valve seat 22A and the valve is opened, the valve body causes the primary pressure chamber 1 on the fluid introduction port 12 side and the secondary pressure chamber 2 on the fluid discharge port 13 side to communicate with each other through a communication hole 23 inside, and moves the fluid from the primary pressure chamber 1 to the secondary pressure chamber 2.

On the other hand, when the valve body 21A is seated on the valve seat 22A and the valve is closed, the movement of the fluid from the primary pressure chamber 1 to the secondary pressure chamber 2 is regulated.

In the valve body 21A, an end portion on a side seated on the valve seat 22A is defined as a distal end 211A, and an end portion on the opposite side is defined as a rear end 212A.

At an intermediate position of the passage 11, a first reduced diameter portion 16a having a reduced inner diameter and a second reduced diameter portion 16b having an inner diameter smaller than that of the first reduced diameter portion 16a and located on the secondary pressure chamber 2 side are continuously formed.

An annular collar 17 and an O-ring 18 located closer to the primary pressure chamber 1 than the collar 17 are attached to the first reduced diameter portion 16a.

The collar 17 has an inner diameter slightly larger than an outer diameter of the valve body 21A, and has a role of guiding the reciprocating operation of the valve body 21A in the axial direction while preventing the valve body 21A from directly contacting the body 10.

A material of the collar 17 can be formed of, for example, a synthetic resin, and particularly, a material having good slipperiness such as PTFE is preferable.

The O-ring 18 has a role of airtightly sealing the first reduced diameter portion 16a and the valve body 21A.

The collar 17 and the O-ring 18 are held so as not to fall off from the first reduced diameter portion 16a by the second reduced diameter portion 16b and a pressing member 19 mounted on the primary pressure chamber 1 side.

The valve seat 22A is formed in an annular shape, and is fixed to a valve seat holding member 24A by a means such as adhesion or insert molding. The valve seat holding member 24A is fitted between the inlet cover 14 and the body 10.

As a material of the valve seat 22A, for example, an elastic material such as rubber can be used, and in particular, hydrogenated nitrile rubber (HNBR) is suitable.

A piston 25 that receives the fluid pressure in the secondary pressure chamber 2 is fixed in the vicinity of the rear end 212A of the valve body 21A.

By providing the piston 25, when the electric motor 40 is stopped, the piston 25 is pushed by the fluid pressure in the secondary pressure chamber 2, and the valve body 21A is pressed against the valve seat 22A, so that the valve can be closed.

The electric motor 40 includes a stator 41 that supports a winding 42 in a wound state, and a rotor 43 in which a magnet 44 is disposed, and is controlled by a driver 45. As the electric motor, for example, an AC servomotor or a DC brushless motor can be used.

The valve body movement means 30 includes a trapezoidal male screw 31 formed on an outer peripheral surface of the valve body 21A, a trapezoidal female screw 32 formed on an inner peripheral surface of the rotor 43 and meshed with the trapezoidal male screw 31, and a rotation stop 33 provided on the rear end side of the valve body 21A, and is a feed screw mechanism that converts a rotational motion of the electric motor 40 into a linear motion.

The rotation stop 33 includes a rotation stop protrusion 34 protruding outward in a circumferential direction at the rear end 212A of the valve body 21A, and a rotation stop guide 35 protruding from the piston 25 in the axial direction (direction toward the fluid discharge port 13) so as to sandwich the rotation stop protrusion 34.

When the electric motor 40 is driven, the rotational motion of the rotor 43 is transmitted to the valve body 21A via the trapezoidal female screw 32 and the trapezoidal male screw 31, but the rotational motion of the valve body 21A is regulated by the contact between the rotation stop protrusion 34 on the valve body 21A side and the rotation stop guide 35 on the piston 25 side, and is converted into the linear motion in the axial direction.

At this time, the strained force of a sealing member 26 attached to the outer periphery of the piston 25 is larger than the motor torque, and in a case of a pressure applied state, a load in a direction of pressing the valve body 21A against the valve seat 22A is also applied, so that the piston 25 and the valve body 21A do not rotate at the same time.

The pressure sensor 50 detects the fluid pressure on the secondary pressure chamber 2 side. Note that the installation position of the pressure sensor is not limited to this location, and for example, a numerical value of the fluid pressure input to an ECU of a vehicle may be used by installing the pressure sensor at another location.

A pressure regulation structure in the present embodiment controls the electric motor 40 based on the fluid pressure on the secondary pressure chamber 2 side detected by the pressure sensor 50 to operate the valve body movement means 30 to thereby operate the pressure regulation valve 20.

By changing a lift amount of the valve body 21A and changing a flow rate of the fluid passing through the communication hole 23 from the primary pressure chamber 1 to the secondary pressure chamber 2, the pressure of the discharged fluid is automatically adjusted to be equal to the setting pressure.

In the present invention, the valve body 21A is formed by joining two components of a head portion 21a and a body portion 21b.

The head portion 21a is located on the distal end 211A side of the valve body 21A and has a role of being seated on the valve seat 22A when the valve is closed.

The body portion 21b is located on the rear end 212A side of the valve body 21A and has a role of reciprocating in the axial direction by the valve body movement means 30, and the trapezoidal male screw 31 is formed on the outer peripheral surface of the body portion 21b.

The head portion 21a and the body portion 21b have a shape that can be inlay-fitted (in other words, stepped fitted or spigot fitted), and temporary fixing is performed by press-fitting the head portion 21a having a convex shape into the distal end of the body portion 21b having a concave shape, and then they are integrally joined by laser welding to form the valve body 21A.

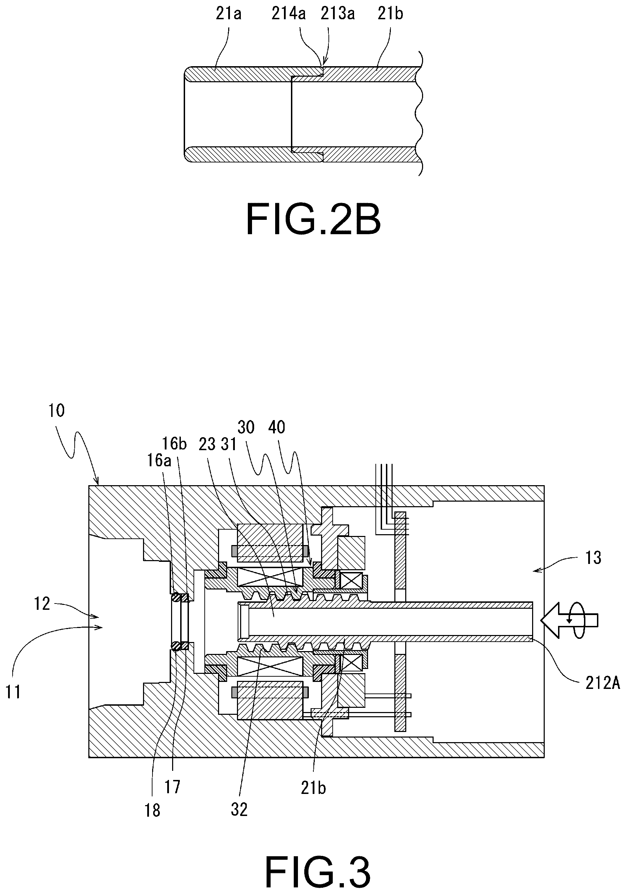

FIG. 2A is a partial cross-sectional view of the head portion 21a and the body portion 21b forming the valve body 21A, and FIG. 2B is a partial cross-sectional view of the head portion 21a and the body portion 21b having different shapes.

As illustrated in FIG. 2B, the head portion 21a having a concave shape may be press-fitted to the distal end of the body portion 21b having a convex shape by reversing unevenness of inlay-fitting.

At least one of the head portion 21a and the body portion 21b is formed with a tapered portion at an outer peripheral end, and the head portion 21a and the body portion 21b are joined with the tapered portion as a welding location.

In the form illustrated in FIG. 2A, a tapered portion 214b is formed at an outer peripheral end 213b of the body portion 21b, and in the form illustrated in FIG. 2B, a tapered portion 214a is formed at an outer peripheral end 213a of the head portion 21a.

The joining method of the head portion 21a and the body portion 21b is not limited to the laser welding, and conventionally known joining methods such as welding other than the laser welding, press-fitting, fitting, caulking, and adhesion can be used.

In the present embodiment, the head portion 21a has a straight shape having the same diameter as that of the body portion 21b.

In the present embodiment, the valve body 21A and the valve seat 22A have a structure in contact with each other in a plane, and the valve body 21A is pressed against the valve seat 22A formed of a material having elasticity such as rubber, so that the valve seat 22A can exert elasticity and come into close contact with the valve body 21A.

Therefore, when the pressure requirement is relatively low, for example, when gas fuel having a moderate pressure of about 5 MPa is introduced, good sealing performance can be obtained.

FIGS. 3 to 5 are views illustrating respective assembly processes (1) to (3) that are assembly processes of the valve body 21A in the first embodiment illustrated in FIG. 1.

FIG. 3 is a view illustrating the assembly process (1). The body portion 21b forming the valve body 21A is inserted while being rotated from the fluid discharge port 13 side, and advances toward the fluid introduction port 12 while screwing the trapezoidal male screw 31 and the trapezoidal female screw 32.

All the components depicted in FIG. 3 are components common to a second embodiment to be described later, and the present invention can realize commonization of components between different specifications and facilitate manufacturing and management.

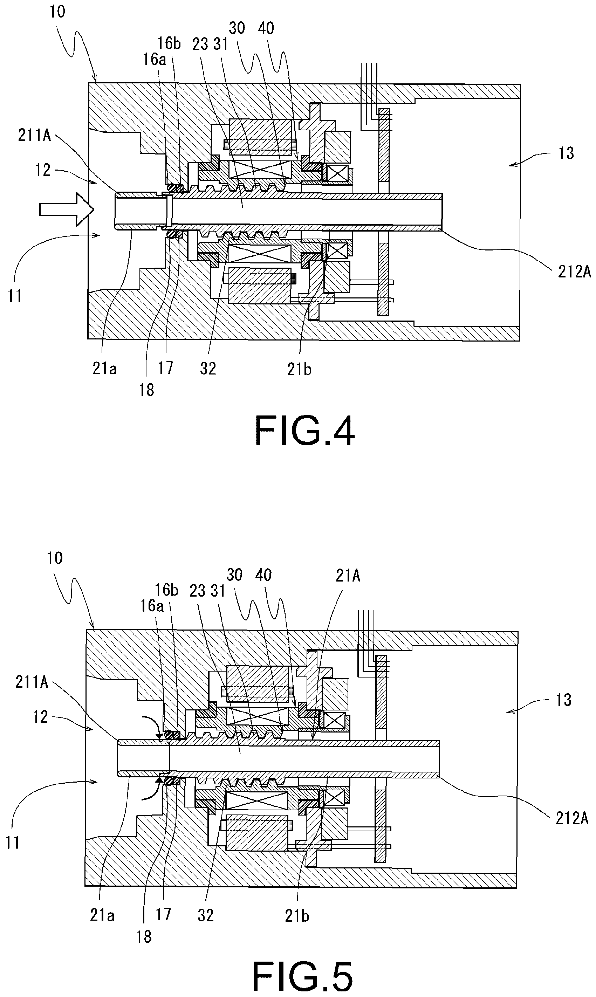

FIG. 4 is a view illustrating the assembly process (2). After the body portion 21b advances toward the fluid introduction port 12 by a predetermined amount and the distal end of the body portion 21b passes through the first reduced diameter portion 16a, the head portion 21a is inserted from the fluid introduction port 12 side and press-fitted into the body portion 21b while being inlay-fitted.

FIG. 5 is a view illustrating the assembly process (3). After the press-fitting of the head portion 21a into the body portion 21b is completed, matching surfaces (black arrow portions) are welded by laser welding to be inseparably joined.

As illustrated in FIG. 2A, in the present embodiment, the tapered portion 214b is formed at the outer peripheral end 213b of the body portion 21b, and the head portion 21a and the body portion 21b are joined with the tapered portion 214b as a welding location.

As a result, protrusion of the welding location between the head portion 21a and the body portion 21b is suppressed without particularly performing post-processing or the like, and the welding location has a shape that is less likely to come into contact with the collar 17 and the O-ring 18, so that adverse effects on slidability and sealability can be avoided.

### <Second Embodiment>

A second embodiment of the present invention will be described below.

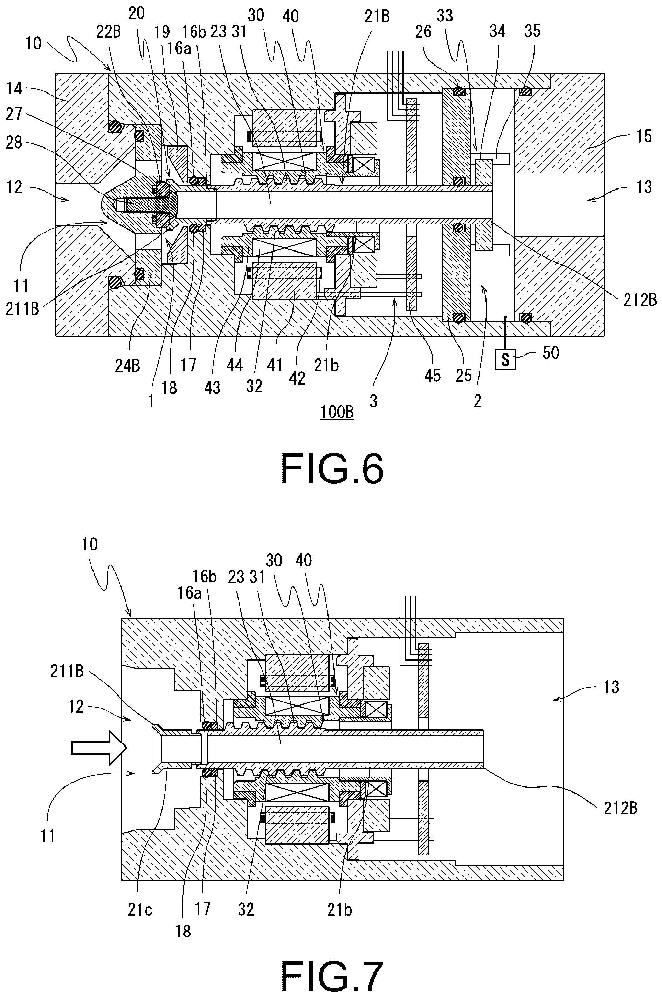

FIG. 6 illustrates a regulator 100B according to the second embodiment of the present invention. Since the regulator 100B has a configuration similar to that of the regulator 100A except for structures of a valve body 21B and a valve seat 22B, similar components are denoted by the same reference numerals, and the description thereof will be omitted.

The regulator 100B is mainly assumed to be used as a pressure reduction means for delivering gas fuel such as CNG, LPG, or hydrogen gas while reducing a pressure of the gas fuel to a predetermined pressure in a supply system of the gas fuel, and the second embodiment is suitable when a pressure requirement is relatively high.

The valve body 21B is formed by joining two components of a head portion 21c and a body portion 21b.

The head portion 21c is located on the distal end 211B side of the valve body 21B and has a role of being seated on the valve seat 22B when a valve is closed. The shape thereof is a funnel shape having a cylindrical portion and an expanded portion, and the distal end 211B has an inversely tapered shape having a larger diameter than the body portion 21b.

The body portion 21b is located on the rear end 212B side of the valve body 21B and has a role of reciprocating in an axial direction by a valve body movement means 30, and a trapezoidal male screw 31 is formed on an outer peripheral surface of the body portion 21b.

The valve seat 22B is formed in an annular shape having a rounded outer peripheral edge, and is fixed to a valve seat holding member 24B by a fixing screw 28 inserted into a center hole 27. The valve seat holding member 24B is fitted between an inlet cover 14 and a body 10.

As a material of the valve seat 22B, for example, a material having cold resistance and appropriate flexibility such as a synthetic resin can be used, and polyimide (PI) is particularly suitable.

In the present embodiment, the valve body 21B and the valve seat 22B have a structure in which an inner peripheral surface of the valve body 21B and an outer peripheral edge of the valve seat 22B are in contact with each other in a curved surface, and the valve body 21B is strongly pressed against the valve seat 22B formed of a material such as a synthetic resin, so that the valve seat 22B can come into close contact with the valve body 21B.

Therefore, when the pressure requirement is relatively high, for example, when gas fuel having a high pressure of about 20 MPa is introduced, the valve body 21B is strongly pressed against the valve seat 22B, so that good sealing performance can be obtained.

In addition, although the pressure regulation valve 20 is exposed to an extremely low temperature of around - 200°C due to a temperature decrease by adiabatic expansion when the pressure is reduced to around the atmospheric pressure, by using a material such as a synthetic resin, cold resistance higher than that of rubber is exhibited, and the pressure regulation valve can function as a valve even in an environment of an extremely low temperature.

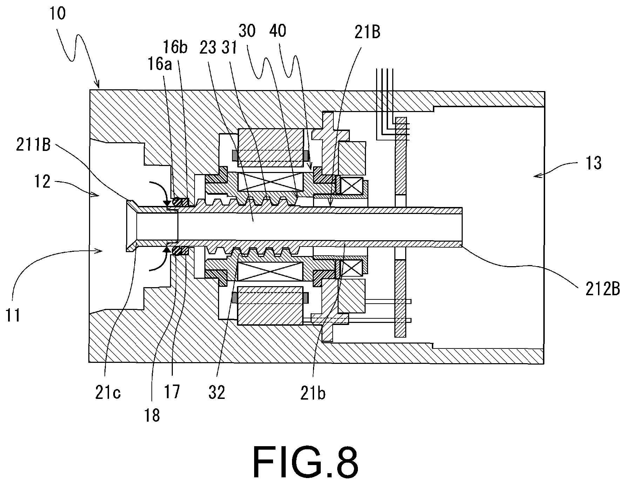

FIGS. 7 and 8 are views illustrating assembly processes (2) and (3) which are assembly processes of the valve body 21B in the second embodiment illustrated in FIG. 6. The assembly process (1) of the valve body 21B is the same as the assembly process (1) of the valve body 21A illustrated in FIG. 3.

As illustrated in FIG. 3, the body portion 21b forming the valve body 21B is inserted while being rotated from the fluid discharge port 13 side, and advances toward the fluid introduction port 12 while screwing the trapezoidal male screw 31 and the trapezoidal female screw 32.

As illustrated in FIG. 7, the body portion 21b forming the valve body 21B advances toward the fluid introduction port 12 by a predetermined amount, the distal end of the body portion 21b passes through the first reduced diameter portion 16a, and then the head portion 21c is inserted from the fluid introduction port 12 side and press-fitted into the body portion 21b while being inlay-fitted.

FIG. 8 is a view illustrating the assembly process (3) of the valve body 21B. After the press-fitting of the head portion 21c into the body portion 21b is completed, matching surfaces (black arrow portions) are welded by laser welding to be inseparably joined.

A diameter of the distal end of the head portion 21c having an inversely tapered shape is larger than diameters of a first reduced diameter portion 16a and a second reduced diameter portion 16b of the body 10, and when the valve body is formed of one component, assembling is impossible.

On the other hand, the valve body 21B is formed of two components of the head portion 21c and the body portion 21b in this manner, and the valve body 21B can be assembled in the body 10 and completed by being inserted and engaged from the fluid discharge port 13 side and the fluid introduction port 12 side, respectively.

As described above, according to the present invention, in the regulator that reduces and adjusts the fluid pressure, it is possible to realize commonization of components between different specifications and to facilitate manufacturing and management.

Regarding the valve body in which processing has been difficult because the valve body has a cylindrical shape with a relatively long overall length and includes a screw portion and a valve portion, it is also possible to manufacture each component by different manufacturing means suitable for each, for example, manufacturing the head portion by cutting processing and the body portion by rolling processing, which is advantageous in terms of manufacturing.

Note that the first embodiment and the second embodiment of the present invention are electronically controlled regulators having an electric motor, but can be similarly implemented in a piston type regulator having a pressure regulation spring and a piston.

### Reference Signs List

100A Regulator
100B Regulator
1 Primary pressure chamber
2 Secondary pressure chamber
3 pressure control unit
10 Body
11 Passage
12 Fluid introduction port
13 Fluid discharge port
14 Inlet cover
15 Outlet cover
16a First reduced diameter portion
16b Second reduced diameter portion
17 Collar
18 O-ring
19 Pressing member
20 Pressure regulation valve
21A, 21B Valve body
21a, 21c Head portion
21b Body portion
22A, 22B Valve seat
23 Communication hole
24A, 24B Valve seat holding member
25 Piston
26 Sealing member
27 Center hole
28 Fixing screw
30 Valve body movement means
31 Trapezoidal male screw
32 Trapezoidal female screw
33 Rotation stop
34 Rotation stop protrusion
35 Rotation stop guide
40 Electric motor
41 Stator
42 Winding
43 Rotor
44 Magnet
45 Driver
50 Pressure sensor
211A, 211B Distal end
212A, 212B Rear end
213a, 213b Outer peripheral end
214a, 214b Tapered portion

## Claims

1. A regulator (100A, 100B) comprising:
a body (10) in which a passage (11) through which a fluid passes is formed to penetrate the body (10), the body (10) having one end of the passage (11) as a fluid introduction port (12) and the other end of the passage (11) as a fluid discharge port (13); and
a pressure regulation valve (20) provided on the passage (11) and partitioning a primary pressure chamber (1) on a side of the fluid introduction port (12) and a secondary pressure chamber (2) on a side of the fluid discharge port (13),
the regulator (100A, 100B) enabling a fluid whose pressure is adjusted to a predetermined pressure to be extracted from the fluid discharge port (13), wherein
the pressure regulation valve (20) includes
a cylindrical valve body (21A, 21B) which is capable of reciprocating in an axial direction and causes the primary pressure chamber (1) and the secondary pressure chamber (2) to communicate with each other when a valve is opened,
a valve seat (22A, 22B) which is mounted on the body (10) and on which the valve body (21A, 21B) is seated when the valve is closed, and
a valve body movement means (30) which reciprocates the valve body (21A) in the axial direction, and
the valve body (21A) is formed by joining
a head portion (21a, 21c) seated on the valve seat (22A, 22B) when the valve is closed and
a body portion (21b) reciprocating in the axial direction by the valve body movement means (30).

2. The regulator (100A, 100B) according to claim 1, wherein
a shape of the head portion (21a, 21c) is
a straight shape in which a whole portion has the same diameter as the body portion (21b), or
an inversely tapered shape in which a distal end (211B) has a larger diameter than the body portion (21b).

3. The regulator (100A, 100B) according to claim 1, wherein
the head portion (21a, 21c) and the body portion (21b) have shapes capable of being inlay-fitted, and the head portion (21a, 21c) and the body portion (21b) that are inlay-fitted are joined by welding.

4. The regulator (100A, 100B) according to claim 3, wherein
at least one of the head portion (21a, 21c) and the body portion (21b) has a tapered portion (214a, 214b) formed at an outer peripheral end (213a, 213b), and the head portion (21a, 21c) and the body portion (21b) are joined with the tapered portion (214a, 214b) as a welding location.

5. The regulator (100A, 100B) according to claim 1, wherein
the pressure regulation valve (20) includes
a cylindrical valve body (21A, 21B) capable of reciprocating in the axial direction and causing the primary pressure chamber (1) and the secondary pressure chamber (2) to communicate with each other when the valve is opened,
a valve seat (22A, 22B) which is mounted on the body (10) and on which the valve body (21A, 21B) is seated when the valve is closed,
a valve body movement means (30) which reciprocates the valve body (21A, 21B),
an electric motor (40) which operates the valve body movement means (30), and
a pressure sensor (50) which detects a fluid pressure on a side of the secondary pressure chamber (2), and
the pressure regulation valve (20) is operated by operating the valve body movement means (30) by controlling the electric motor (40) based on the fluid pressure on the side of the secondary pressure chamber (2) detected by the pressure sensor (50).

6. The regulator (100A, 100B) according to claim 5, wherein
the valve body movement means (30) includes
a trapezoidal male screw (31) which is formed on an outer peripheral surface of the body portion (21b),
a trapezoidal female screw (32) which is formed in a rotor (43) of the electric motor (40), and
a rotation stop (33) that prevents rotation of the valve body (21A, 21B), and
the valve body movement means (30) has a feed screw structure which converts a rotational motion of the electric motor (40) into a linear motion.
